# EUROPÄISCHE PATENTSCHRIFT

(11) **EP 0 850 493 B1**
(45) Veröffentlichungstag und Bekanntmachung des Hinweises auf die Patenterteilung: **06.09.2000**
(21) Anmeldenummer: 96923852.6
(22) Anmeldetag: 09.07.1996
(51) Int. Cl.: H01M 4/20, H01M 4/14

(54) **VERFAHREN ZUR HERSTELLUNG VON BLEIELEKTRODEN**
PROCESS FOR MANUFACTURING LEAD ELECTRODES
PROCEDE DE FABRICATION D'ELECTRODES EN PLOMB

(43) Veröffentlichungstag der Anmeldung: 01.07.1998
(73) Patentinhaber: Accumulatorenwerke Hoppecke Carl Zoellner & Sohn GmbH & Co. KG, 59929 Brilon (DE)
(72) Erfinder: TILLMANN, Heinz, Günter, D-59555 Lippstadt (DE); SASSMANNSHAUSEN, Günter, D-59929 Brilon (DE)
(74) Vertreter: Stenger, Watzke & Ring Patentanwälte
(86) Internationale Anmeldenummer: DE9601289
(87) Internationale Veröffentlichungsnummer: WO9801914

(56) Entgegenhaltungen:
- DE-A- 4 131 352
- GB-A- 2 081 491
- GB-A- 2 082 092
- US-A- 1 659 654
- US-A- 4 606 982
- CHEMICAL ABSTRACTS, vol. 118, no. 4, 25.Januar 1993 Columbus, Ohio, US; abstract no. 25045, ASANO, MINORU ET AL: "Apparatus for manufacturing bag-shaped separators for secondary batteries" XP002026173 & JP 04 237 947 A (MATSUSHITA ELECTRIC INDUSTRIAL CO., LTD., JAPAN)
- PATENT ABSTRACTS OF JAPAN vol. 013, no. 348 (E-799), 4.August 1989 & JP 01 107451 A (JAPAN STORAGE BATTERY CO LTD), 25.April 1989,
- PATENT ABSTRACTS OF JAPAN vol. 012, no. 389 (E-669), 17.Oktober 1988 & JP 63 131464 A (YUASA BATTERY CO LTD), 3.Juni 1988,
- PATENT ABSTRACTS OF JAPAN vol. 013, no. 531 (E-851), 28.November 1989 & JP 01 217867 A (JAPAN STORAGE BATTERY CO LTD), 31.August 1989,
- PATENT ABSTRACTS OF JAPAN vol. 006, no. 211 (E-137), 23.Oktober 1982 & JP 57 115762 A (NIHON DENCHI KK), 19.Juli 1982,
- PATENT ABSTRACTS OF JAPAN vol. 007, no. 129 (E-179), 4.Juni 1983 & JP 58 046576 A (YUASA DENCHI KK), 18.März 1983,
- PATENT ABSTRACTS OF JAPAN vol. 012, no. 369 (E-665), 4.Oktober 1988 & JP 63 121253 A (YUASA BATTERY CO LTD), 25.Mai 1988,
- PATENT ABSTRACTS OF JAPAN vol. 013, no. 259 (E-773), 15.Juni 1989 & JP 01 054667 A (JAPAN STORAGE BATTERY CO LTD), 2.März 1989,

## Beschreibung

Die Erfindung betrifft ein Verfahren zur Herstellung von Bleielektroden für Akkumulatoren, wobei Gitterelemente aus Blei hergestellt, mit einer aktiven Masse versehen und beidseitig mit einer Schicht aus Mikroglasfaser belegt werden. Weiterhin betrifft die Erfindung eine neuartige Bleielektrode.

Bei einem gattungsgemäßen Herstellungsverfahren für Bleielektroden werden zunächst Gitterelemente hergestellt. Dies erfolgt entweder im Rahmen einer Einzelherstellung, indem die einzelnen Gitterelemente gegossen werden, oder im Rahmen eines kontinuierlichen Gießverfahrens. Anschließend erfolgt das Aufbringen der erforderlichen Vorstufe der aktiven Masse. Um aus einer Vielzahl von mit aktiver Masse versehenen Gitterelementen einen Zellenblock bilden zu können, müssen diese voneinander elektrisch separiert sein. Somit wird nach dem Aufbringen der aktiven Masse ein Separator, üblicherweise in Blattform, auf beide Seiten des mit aktiver Masse versehenen Gitterelementes aufgelegt. Mikroglasfaser wird verwendet, weil dieses eine Querdurchströmung der Zellenblöcke durch die entstehenden Gase ermöglicht, was den Einsatz der Zellenblöcke in geschlossenen Gehäusen besonders begünstigt. Dabei ist es wesentlich, daß die Separatoren, also auch die Mikroglasfaserflächen über die Kanten des Gitterelementes hinausstehen, um Kurzschlußbrücken verhindern zu können. Entweder ist das Einzelblatt groß genug, oder es werden aus der Mikroglasfaser Taschen gebildet, die auch die Kanten umgreifen.

Die mit aktiver Masse versehenen Gitterelemente werden üblicherweise auf beiden Seiten mit einfachem Papier beschichtet, um weiterhin handhabbar zu sein. Hieran schließt sich eine Vortrocknung an. Die mit aktiver Masse versehenen Gitterelemente müssen anschließend zur Reifung gelagert werden. Zu diesem Zwecke werden Stapel gebildet, wofür beidseitig eine Papierbeschichtung vorgesehen ist, um ein Verkleben der Platten verhindern zu können und die Platten handhabbar zu machen.

Aus der GB 2 082 092 A ist ein Verfahren zum Herstellen von Akkumulatorenplatten bekannt, bei dem in einer ununterbrochenen Folge nebeneinander angeordnete, skelettartige Gitter kontinuierlich gegossen und pastiert werden. Diese werden mit fortlaufenden Glasfasern und anderen Geweben beidseitig belegt und anschließend in einzelne Platten zerteilt. Die US 4 606 982 offenbart ein Verfahren zum Herstellung von Blei-Säure-Akkumulatoren. Bei diesem Verfahren werden aus Mikroglasfasern bestehende Separatoren beidseitig auf eine mit einer pastösen Masse versehenen Gitterplatte aufgebracht und mittels einer Schneideinrichtung in einer gewünschten Länge abgeschnitten. Das Einbringen der pastösen Masse kann dabei in einem kontinuierlichen Prozeß erfolgen.

Ausgehend von diesem Stand der Technik liegt der vorliegenden Erfindung die **Aufgabe** zugrunde, ein Verfahren zur Herstellung von Bleielektroden dahingehend zu verbessern, daß dieses auf einfache und wirtschaftliche Weise mit einem hohen Grad an Automatisation durchführbar ist.

Zur technischen **Lösung** dieser Aufgabe wird ein gattungsgemäßes Verfahren dadurch verbessert, daß das Einbringen der aktiven Masse und das Beschichten mit Mikroglasfasern automatisch in einem kontinuierlichen Verfahren erfolgen, daß die Mikroglasfaser ohne Bildung eines Überstandes am Rand beschnitten wird und daß die mit aktiver Masse und Mikroglasfaser versehenen Bleielektroden anschließend mit einem Separatormaterial aus Polyehtylenfolie versehen werden.

Mit dem erfindungsgemäßen Verfahren wird somit vorgeschlagen, Gitterelemente einer Vorrichtung zuzuführen, in welcher die Maschen der Gitterelemente mit einer sich im pastösen Zustand befindlichen Masse gefüllt werden. Anschließend erfolgt ohne Zwischenlage weiterer Papiere oder dergleichen eine automatische Mikroglasfaserbeschichtung, wobei die Mikroglasfaser, die auf beiden Seiten des Gitters aufgebracht ist, ohne Bildung von Überständen am Rand beschnitten wird. Um Kurzschlußbrücken zu vermeiden, wird mit der Erfindung zudem vorgeschlagen, die separierten Gitterelemente mit Separatormaterial, in denen die Gitterelemente eingesetzt werden, zu versehen. Als Separatormaterial wird dabei eine Polyethylenfolie mit Kieselsäureeinlagerungen vorgeschlagen.

Durch das erfindungsgemäße Verfahren wird vorgeschlagen, die fertiggestellten Gitterelemente einer Vorrichtung zuzuführen, in welcher die aktive Masse, die sich in einem pastösen Zustand befindet, in das Gitter eingebracht wird, um dessen Maschen zu füllen, und direkt anschließend ohne Zwischenlage weiterer Papiere und dgl. eine automatische Mikroglasfaserbeschichtung erfolgt, derart, daß die Mikroglasfaser, die auf beiden Seiten des Gitters aufgebracht ist, ohne Bildung von Überständen beschnitten wird.

Durch das erfindungsgemäße Verfahren erhält man weiterverarbeitbare Bleielektroden, ohne daß ein großer personeller Aufwand betrieben werden muß. Auch konnte auf die Zwischenlage von Papier verzichtet werden.

In vorteilhafter Weise werden die Gitterelemente aus Blei kontinuierlich hergestellt, so daß sich Streifen von miteinander zusammenhängenden Gitterelementen ergeben, die ebenso kontinuierlich der Vorrichtung zum Einbringen der aktiven Masse zugeführt werden. In vorteilhafter Weise erfolgt das Aufbringen der Mikroglasfaser direkt nach dem Einbringen der aktiven Masse in einem kontinuierlichen Vorgang, wobei die Mikroglasfaser in streifenförmigem Zustand von einer Rolle abgezogen und auf den Gitterelementenstreifen aufgelegt wird. Schließlich erfolgt im Anschluß an das Aufbringen der Mikroglasfaser ein Separieren der einzelnen Gitterelemente durch Schneiden der Streifen. Somit können von vornherein die Mikroglasfasern in konfektionierten Streifen auf die Streifen definierter Breite von Gitterelementen aufgelegt werden. Somit ist eine einfache Automatisierung möglich. Anschließend erfolgt durch einfaches Ablängen ein Separieren der Gitterelemente, so daß die Mikroglasfaser ohne Bildung von Überständen automatisch auf beiden Seiten des Gitterelementes angeordnet ist. Gemäß einem vorteilhaften Vorschlag der Erfindung werden die Kanten zur Vermeidung von Kurzschlußbrücken behandelt. Hierzu wird vorgeschlagen, die separierten Gitterelemente in Taschen eines Separatormaterials einzusetzen. Diese Taschen können ebenfalls in einem automatischen Verfahren direkt unter Aufnahme des jeweiligen Gitterelementes gebildet werden. Als Separatormaterial wird eine Polyethylenfolie (PE-Folie) mit Kieselsäureeinlagerungen vorgeschlagen.

Mit der Erfindung wird ein neues und in höchstem Grade automatisierbares Verfahren zur Herstellung von Bleielektroden bereitgestellt. Dieses Verfahren unterstützt die Automatisierung des Herstellungsvorganges, indem die Gesamtherstellung auf das Einbringen der aktiven Masse, das Auflegen von Mikroglasfaser und das Beschneiden der Ränder ohne Überstandsbildung reduziert wird. All diese Schritte lassen sich einfach automatisieren. Am Abschluß dieses Verfahrens steht ein einfach und weiterhin handhabbares Bleielektrodenelement bereit. Dieses kann entweder in herkömmlicher Weise zur Reifung gestapelt und abgelagert werden, oder es kann direkt beispielsweise unter Einpacken in eine separate Tasche weiterbehandelt werden.

Das nach dem erfindungsgemäßen Verfahren fertiggestellte Bleielektrodenelement ist ebenfalls neu. Es besteht aus einem Gitterelement, welches in herkömmlicher Weise mit aktiver Masse versehen ist und beidseitig eine kantenbündige Mikroglasfaserschicht aufweist. Dieses neuartige Bleielektrodenelement läßt sich in weiterhin automatisierte Weiterverarbeitungsgänge leicht integrieren. Das erfindungsgemäße Bleielektrodenelement ist in einer Separatortasche angeordnet, so daß auch bei Stapelbildung Kurzschlußbrücken im Kantenbereich der Bleielektroden vermeidbar sind.

Weitere Vorteile und Merkmale der Erfindung ergeben sich aus der folgenden Beschreibung anhand der Figuren. Dabei zeigen:
- Fig. 1: eine schematische Darstellung des Herstellungsprozesses in einer perspektivischen Ansicht und
- Fig. 2: eine Darstellung gemäß Fig. 1 in einer Draufsicht.

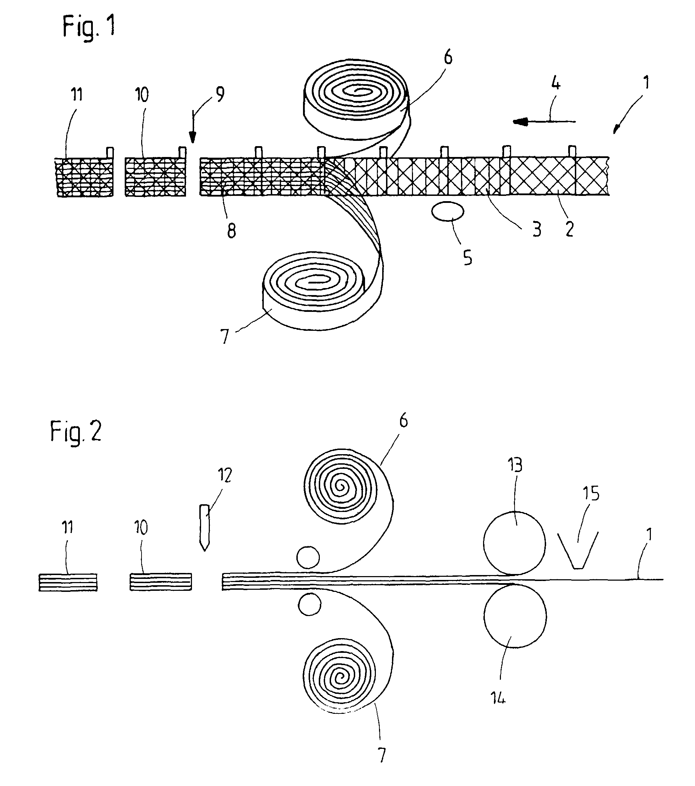

Figuren 1 und 2 zeigen schematisch den automatisierten Verfahrensablauf bei der Herstellung von Bleielektroden. In dem gezeigten Ausführungsbeispiel werden Bleielektroden im Rahmen eines automatischen Bleigußvorganges miteinander zusammenhängend einen Streifen bildend hergestellt. Entweder wird dieser Streifen aufgerollt, um sogenannte Keuls zu bilden, oder direkt der Weiterverarbeitung zugeführt.

In beiden Fällen wird der Streifen 1, bei welchem beispielhaft Bleigitter 2, 3 gezeigt sind, in Vorschubrichtung des Pfeiles 4 der Weiterbearbeitung zugeführt. Im Bereich 5 erfolgt eine Beschichtung mit der aktiven Masse, welche in die Gittermaschen einpastiert wird. Beispielsweise kann die in einem separaten Herstellungsverfahren hergestellte, aktive Masse mittels einer Ausbringdüse 15 über die gesamte Breite des Gitterstreifens 1 ausgebracht werden. Anschließend kann mittels Preßwalzen 13, 14, Abstreifwalzen oder dgl. die Mengeneinstellung erfolgen. Die mit aktiver Masse versehenen Gitter werden dann mit Mikroglasfaser beidseitig beschichtet, die von Rollen 6, 7 abgezogen und auf die beiden Oberflächen aufgebracht werden. Dabei haben die Mikroglasfaserstreifen eine Breite, die der der Gitterstreifen entspricht. Nach erfolgter Beschichtung mit der Mikroglasfaser erfolgt im Bereich 9 eine Trennung der einzelnen Gitterelektroden voneinander mittels der Schneideinheit 12, die schematisch in Fig. 2 angedeutet ist. Es ergeben sich somit die fertig mit aktiver Masse und Mikroglasfaser versehenen Elektroden 10, 11, die der weiteren Verarbeitung zugeführt werden können.

Das gezeigte Ausführungsbeispiel dient der Erläuterung und ist nicht beschränkend. Insbesondere können die Gitterelemente auch bereits separat zugeführt werden. In diesem Fall erfolgt nach dem Aufbringen der Mikroglasfaser ein Randbeschneiden.

Die fertigen Bleielektroden 10, 11 können einerseits einfach weiterverarbeitet werden, beispielsweise zur Reifung gestapelt, mit Separatoren in Taschenform versehen werden oder dergleichen. Andererseits haben sie hervorragende elektrochemische Eigenschaften, da ein Gasquertransport bei gebildeten Elektronenpaketen nicht mehr behindert ist, wie dies beispielsweise bei der Verwendung von Trennpapieren und dgl. der Fall sein kann

### Bezugszeichenliste

- 1: Streifen
- 2: Gitterelement
- 3: Gitterelement
- 4: Vorschubrichtung
- 5: Pastiereinheit
- 6: Rolle
- 7: Rolle
- 8: beschichtetes Element
- 9: Trennung
- 10: Elektrode
- 11: Elektrode
- 12: Schneideinheit
- 13: Preßwalze
- 14: Preßwalze
- 15: Ausbringdüse

## Patentansprüche

1. Verfahren zur Herstellung von Bleielektroden für Akkumulatoren, wobei Gitterrelemente aus Blei hergestellt, mit einer aktiven Masse versehen und beidseitig mit einer Mikroglasfaser - Schicht belegt werden,
**dadurch gekennzeichnet**,
daß das Einbringen der aktiven Masse und das Beschichten mit Mikroglasfasern automatisch in einem kontinuierlichen Verfahren erfolgen, daß die Mikroglasfaser ohne Bildung eines Überstandes am Rand beschnitten wird, und daß die mit aktiver Masse und Mikroglasfaser versehenen Bleielektroden anschließend mit einem Separatormaterial aus Polyethylenfolie mit Kieselsäureeinlagerungen unter Bildung von Taschen versehen werden.

2. Verfahren nach Anspruch 1, dadurch gekennzeichnet, daß die Gitterelemente in einem kontinuierlichen Bleigießverfahren hergestellt werden.

3. Verfahren nach einem der vorhergehenden Ansprüche, dadurch gekennzeichnet, daß die Mikroglasfaser in Streifenform zum Belegen der Gitterelemente zugeführt und anschließend abgelängt wird.

4. Bleielektrode, hergestellt nach dem Verfahren nach wenigsten einem der Ansprüche 1 bis 4, umfassend ein Bleigitterelement, eine in die Gittermaschen eingefüllte aktive Masse, eine mit dem Bleigitterelement kantenbündig beidseitig ausgelegte Beschichtung aus Mikroglasfasern sowie eine als Separatormaterial taschenförmig beide Oberflächen und den Kantenbereich abdekkende Polyethylenfolie mit Kieselsäureeinlagerungen.

## Claims

1. Method for producing lead electrodes for rechargeable batteries, in which case grid elements are produced from lead, are provided with an active compound and are coated on both sides with a microglass fibre layer,
characterized
in that the incorporation of the active compound and the coating with microglass fibres are carried out automatically in a continuous process, in that the microglass fibres are cut without forming a projection at the edge, and in that the lead electrodes provided with the active compound and microglass fibres are then provided with a separator material, composed of polyethylene film with silicic acid enclosures, forming pockets.

2. Method according to Claim 1, characterized in that the grid elements are produced in a continuous lead casting process.

3. Method according to one of the preceding claims, characterized in that the microglass fibres are supplied in strip form in order to coat the grid elements, and are then cut to length.

4. Lead electrode, produced using the method according to at least one of Claims 1 to 4, comprising a lead grid element, an active compound which is introduced into the grid meshes, a coating of microglass fibres which is designed such that its edges are flush with the lead grid element on both sides, and a polyethylene film which, as a separator material, covers both surfaces and the edge region like a pocket and has silicic acid enclosures.

## Revendications

1. Procédé de fabrication d'électrodes en plomb pour accumulateurs, dans lequel des éléments de grille en plomb sont fabriqués, enduits d'une pâte de matière active et garnis des deux côtés d'une couche de micro-fibres de verre, **caractérisé en ce que** l'introduction de la pâte de matière active et le revêtement avec des micro-fibres de verre se font automatiquement selon un procédé continu, en ce que la micro-fibre de verre est coupée sans dépassement du bord, et en ce que les électrodes de plomb enduites de pâte de matière active et garnies de micro-fibres de verre sont ensuite pourvues d'un matériau formant séparateur constitué d'une feuille de polyéthylène comportant des inclusions d'acide silicique, avec formation simultanée de poches.

2. Procédé selon la revendication 1, caractérisé en ce qe les éléments de grille sont fabriqués dans un procédé de coulage de plomb en continu.

3. Procédé selon l'une quelconque des revendications précédentes, caractérisé en ce que la micro-fibre de verre est amenée sous forme de bande pour garnir les éléments de grille, puis est coupée à bonne longueur.

4. Electrode de plomb fabriquée selon le procédé conforme à l'une au moins des revendications 1 à 4, comprenant un élément de grille de plomb, une pâte de matière active introduite dans les mailles de grille, un revêtement en micro-fibres de verre s'étendant des deux côtés de l'élément de grille en plomb, bord à bord avec celui-ci, ainsi qu'à titre de matériau formant séparateur, une feuille de polyéthylène comportant des inclusions d'acide silicique, couvrant, sous forme de sac, les deux faces et la zone des bords.
